# EUROPÄISCHE PATENTSCHRIFT

(11) **EP 1 063 137 B1**
(45) Veröffentlichungstag und Bekanntmachung des Hinweises auf die Patenterteilung: **14.12.2005**
(21) Anmeldenummer: 00113420.4
(22) Anmeldetag: 23.06.2000
(51) Int. Cl.: B60T 1/087, G05D 16/20, F15B 11/028

(54) **Ventileinrichtung zur Steuerung der Funktionsweise eines hydrodynamischen Retarders**
Valve device for controlling the operation of an hydrodynamic retarder
Dispositif de soupape pour commander l'opération d'un ralentisseur hydrodynamique

(30) Priorität: 25.06.1999 DE 19929152
(43) Veröffentlichungstag der Anmeldung: 27.12.2000
(73) Patentinhaber: Voith Turbo GmbH & Co. KG, 89522 Heidenheim (DE)
(72) Erfinder: Scherer, Roland, 74564 Crailsheim (DE); Rose, Peter, 89522 Heidenheim (DE)
(74) Vertreter: Dr. Weitzel & Partner

(56) Entgegenhaltungen:
- EP-A- 0 357 964
- EP-A- 0 585 989
- DE-A- 2 824 909
- DE-A- 4 320 695
- DE-A- 19 642 344

## Beschreibung

Die Erfindung betrifft einen hydrodynamischen Retarder gemäß dem Oberbegriff des Anspruchs 1.

Hydrodynamische Retarder für den Einsatz in Fahrzeugen sind in einer Vielzahl von Ausführungen bekannt. Stellvertretend wird auf das Druckwerk: "Hydrodynamik in der Antriebstechnik", Vereinigte Fachverlage, Krauskopf-Ingenieur Digest, Mainz 1987, verwiesen. Die Funktionsweise des hydrodynamischen Retarders wird in der Regel Ober den Füllungsgrad gesteuert. Dabei wird bei Inbetriebnahme der Retarder befüllt, während zur Außerbetriebnahme der Retarder in der Regel entleert wird. Hydrodynamische Retarder sind in der Regel steuer- und regelbar. Das Betriebsmittel läuft dabei in einem geschlossenen Kreislauf um. Die Füllung des Retarders wird über Druckluft gesteuert. Die Befüllung erfolgt aus einer Einrichtung zur Bereitstellung des Betriebsmittels in Form eines Behälters mit Betriebsmittel. Der Druck wirkt dabei auf den Betriebsmittelsumpf und bewirkt ein Einströmen von Betriebsmittel in den Arbeitskreislauf, bis ein Druckgleichgewicht hergestellt ist. Die Sollwertvorgabe für den einzustellenden Funktionszustand des hydrodynamischen Retarders erfolgt beim Einsatz in Fahrzeugen in der Regel durch den Fahrer über einen Betätigungshebel an der Lenksäule oder ein Trittplatten-Fußpedal. Diese Sollwertvorgabe wird in einem elektronischen Regler In ein Stellsignal zum pneumatischen Druckregelventil umgesetzt. Mit der elektronischen Steuerung können dabei unterschiedliche Regel- und Überwachungsfunktionen, wie zum Beispiel konstantes Bremsmoment, konstante Verzögerung oder konstante Geschwindigkeit eingeregelt werden. Bisher fand zur Begrenzung des erzeugbaren Stelldruckes ein mechanisches Druckbegrenzungsventil Verwendung. Ein wesentlicher Nachteil der bisherigen Ausführung bestand darin, daß der erzeugbare Stelldruck aufgrund der bauteilmäßigen Toleranzen der Ventileinrichtung ebenfalls Schwankungen unterworfen war, was sich hinsichtlich der zu realisierenden Steuer- und Regelaufgaben als nachteilig erwies. Als weiterer Nachteil wäre der hohe Luftverbrauch bei aktivem Ventil und damit aktiven Retarder zu nennen, welcher sich negativ auf den Energieverbrauch im Fahrzeug auswirkt. Des weiteren war die konstruktive Ausführung im Hinblick auf die Druckbegrenzungsfunktion durch einen hohen konstruktiven Aufwand und damit hohe Kosten gekennzeichnet.

Ein gattungsgemäßer Retarder ist aus der Druckschrift EP-A-0 585 989 vorbekannt. Diese offenbart eine Ventileinrichtung zur Steuerung eines hydrodynamischen Retarders zur Umwandlung eines Stellsignals, welches durch wenigstens eine Sollwertvorgabe für eine gewünschte Betriebsweise wenigstens mittelbar beschreibende Größe charakterisierbar ist, in einen pneumatischen Stelldruck. Die Ventileinrichtung umfasst eine Proportionalventileinrichtung. Diese umfasst eine Federkammer, in welcher derselbe Druck herrscht, wie in der Ausgangsleitung. Eine derartige Ventileinrichtung ist des weiteren aus der EP-A-0 357 064 bekannt, wobei diese eine Einrichtung zur Erfassung einer, den mit der Proportionalventileinrichtung erzeugbaren Stelldruck wenigstens mittelbar charakterisierenden Größe zugeordnet ist, die in Form eines Drucksensors ausgeführt ist und mit der Ventileinrichtung eine bauliche Einheit bildet. Beim Einsatz in Steuerungen hydrodynamischer Retarder kann jedoch bei einem Defekt der Proportionalventileinrichtung eine Fehlbetätigung des Retarders nicht ausgeschlossen werden. Dies führt neben der unerwünschten Abbremsung zu einem erhöhten Energiebedarf.

Der Erfindung lag daher die Aufgabe zugrunde, einen Retarder derart weiterzuentwickeln, dass die genannten Nacheile vermieden werden. Im einzelnen soll die Ventileinrichtung sich durch einen geringen konstruktiven und steuerungstechnischen Aufwand sowie geringe Kosten auszeichnen. Gewünscht wird des weiteren, dass die Einstellung des Stelldruckes keinen oder nur sehr geringen Schwankungen unterworfen ist, sowie keinen oder nur geringen Luftverbrauch aufweist.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Die Ventileinrichtung zur Steuerung der Funktionsweise eines hydrodynamischen Retarders durch Umwandlung eines elektrischen Stellsignales, welches wenigstens einen Sollwert einer, die gewünschte Betriebsweise eines hydrodynamischen Retarders wenigstens mittelbar charakterisierenden Größe beschreibt, in einen pneumatischen Stelldruck zur Beaufschlagung eines Betriebsmittelsumpfes zum Zwecke der Füllung und/oder Entleerung des hydrodynamischen Retarders umfaßt wenigstens eine Proportionalventileinrichtung und eine Einrichtung zur Erfassung einer, den pneumatischen Stelldruck wenigstens mittelbar charakterisierenden Größe. Erfindungsgemäß bildet die Einrichtung zur Erfassung der den pneumatischen Stelldruck wenigstens mittelbar charakterisierenden Größe mit der Proportionalventileinrichtung eine bauliche Einheit. Die Einrichtung zur Erfassung der, den pneumatischen Stelldruck wenigstens mittelbar charakterisierenden Größe umfaßt wenigstens einen Drucksensor. Durch die Einbindung der, mittels dem Drucksensor erfaßbaren, den pneumatischen Stelldruck wenigstens mittelbar charakterisierenden Größe in das Steuerungs- und Regelungskonzept kann dabei auf eine mechanisch wirkende Druckbegrenzungseinrichtung in Form eines Druckbegrenzungsventils verzichtet werden. Ein weiterer wesentlicher Vorteil besteht darin, daß Abweichungen des einzustellenden Stelldruckes vom theoretisch einstellbaren Stelldruck aufgrund der bauteilmäßigen Toleranzen der Ventileinrichtung mittels dem Drucksensor ausgeglichen werden können. Die Stelldruckschwankungen bezogen auf einen vom Fahrer bei Einsatz des hydrodynamischen Retarders in Fahrzeugen vorgebbaren Sollwert für die Funktionsweise des hydrodynamischen Retarders können somit minimiert werden.

Die Ausführung der Proportionalventileinrichtung und der Einrichtung zur Erfassung einer, den Stelldruck wenigstens mittelbar charakterisierenden Größe in einer baulichen Einheit, kann unterschiedlich erfolgen:
a) Integration der Einrichtung zur Erfassung einer, den Stelldruck wenigstens mittelbar charakterisierenden Größe in die Proportionalventileinrichtung, vorzugsweise Integration im Gehäuse;
b) Anordnung der Einrichtung zur Erfassung einer, den Stelldruck wenigstens mittelbar charakterisierenden Größe am Gehäuse der Proportionalventileinrichtung.

Im letztgenannten Fall erfolgt die Anordnung der Einrichtung zur Erfassung einer den Stelldruck wenigstens mittelbar charakterisierenden Größe vorzugsweise im Bereich des Ausganges der Proportionalventileinrichtung, an welcher der Stelldruck bereitgestellt wird.

Die Anbindung des Drucksensors am Gehäuse der Proportionalventileinrichtung kann unterschiedlich erfolgen. Denkbar sind Ausführungen mit form- und/oder kraftschlüssiger oder stoffschlüssiger Verbindung.

In der erfindungsgemäßen Lösung ist die Ventileinrichtung zur Realisierung einer Sicherheitsfunktion für den Fall, daß ein Abschalten des hydrodynamischen Retarders mittels dem Proportionalventil nicht mehr möglich ist, beispielsweise bei Defekt , wenn dieses immer noch in der Belüftungsstellung verharrt, das heißt der Retarder wird befüllt, geeignet. Es sind Mittel zur wahlweisen Kopplung oder Entkopplung der Proportionalventileinrichtung von einer Einrichtung zur Bereitstellung eines Vorratsdruckes vorgesehen. Diese ist in Reihenschaltung mit der Proportionalventileinrichtung angeordnet. Die Schaltventilvorrichtung umfaßt wenigstens zwei Schaltstellungen, eine erste Schaltstellung und eine zweite Schaltstellung. In der ersten Schaltstellung ist die Proportionalventileinrichtung über die Schaltventileinrichtung wenigstens mittelbar mit der Vorrichtung zur Bereitstellung eines Vorratsdruckes gekoppelt. In der zweiten Schaltstellung wird die Verbindung zwischen Proportionalventileinrichtung und Vorrichtung zur Bereitstellung eines Vorratsdruckes unterbrochen. Durch die Reihenschaltung von Proportionalventileinrichtung und Schaltventileinrichtung wird es möglich, auch eine Außerbetriebnahme des Retarders für den Fall zu gewährleisten, daß Störungen auf Seiten des Proportionalventils auftreten, das heißt, wenn dieses defekt ist und in der Belüftungsstellung verbleibt. Der fehlerhafte, unzulässig hohe Stelldruck wird dabei mittels eines Drucksensors erkannt. Dieser wird mittels des Schaltventils vorzugsweise eines 3/2-Wege-Ventiles reduziert oder abgeschaltet. Eine vorteilhafte Zusatzfunktion des Schaltventiles besteht darin, daß mittels eines Schaltdruckes P_{Schalt} pneumatisch zu betätigende Schaltfunktionen den Retarder realisiert werden können, z. B. Umschaltung eines pneumatisch / hydraulischen Ventiles, Betätigung eines Schaltzylinders u. s. w.

In einer weiterbildenden Ausführung der erfindungsgemäßen Ventileinrichtung ist es vorgesehen, die Anschlüsse für den Schaltdruck von seiten der Schaltventileinrichtung, den Stelldruck und die Zentralentlüftung schwingungstechnisch von der Ventileinrichtung zu entkoppeln. Dies wird dadurch realisiert, daß diese Anschlüsse vorzugsweise gemeinsam an einer Seitenfläche des Ventilgehäuses angeordnet werden, um über diese Flanschfläche die Kopplung zum Retarder mittels Dämpfungs- oder Adapterplatte herzustellen.

Die konstruktive Ausgestaltung der Proportionalventileinrichtung und/oder der Schalteinrichtung, insbesondere der Realisierung der Umwandlung eines elektrischen Stellsignales in einen pneumatischen Stelldruck kann vielgestaltig erfolgen. Diese liegt im Arbeitsbereich des zuständigen Fachmannes. Vorzugsweise werden dabei jedoch Ausführungen angestrebt, welche neben einer Pneumatikeinheit auch eine Aktorikbaueinheit umfassen, wobei die Aktorikbaueinheit beispielsweise die elektrische Steuerung beinhaltet. Beispielsweise umfaßt die Aktorikbaueinheit eine Einrichtung zur Aufbringung von elektromotorischer Kraft, welche auf den Ventilkolben der Proportionalventileinrichtung wirkt. Diese Einrichtung umfaßt in der Regel einen Magneten. Die elektrische Steuerung und die Einrichtung sind dabei in der Regel zu einem sogenannten Regelmagneten zusammengefaßt.

Die erfindungsgemäß gestaltete Ventileinrichtung kann für unterschiedliche Steuer- und Regelkonzepte hydrodynamischer Retarder eingesetzt werden. Dabei sind die mittels der Einrichtung zur Erfassung des Stelldruckes ermittelten Größen sowie die Sollwertvorgaben für die Funktionsweise des hydrodynamischen Retarders in entsprechender Weise den Steuerbeziehungsweise Regelvorrichtungen zuzuführen und von diesen zu bearbeiten. Die Ventileinrichtung übernimmt in diesem Fall die Funktion einer Stelleinrichtung.

Die erfindungsgemäße Lösung der Aufgabe wird nachfolgend anhand von Figuren erläutert. Darin ist im einzelnen folgendes dargestellt:
- Figur 1: verdeutlicht in schematisch vereinfachter Darstellung eine Ausführung einer Ventileinrichtung zur Steuerung der Funktionsweise eines hydrodynamischen Retarders; diese Ausführung ist nicht Teil der Erfindung
- Figur 2: zeigt ein Blockschaltbild einer erfindungsgemäß gestalteten Ventileinrichtung mit integrierter Einrichtung zur wahlweisen Kopplung oder Entkopplung der Proportionalventileinrichtung von einer Vorrichtung zur Bereitstellung des Vorratsdruckes.

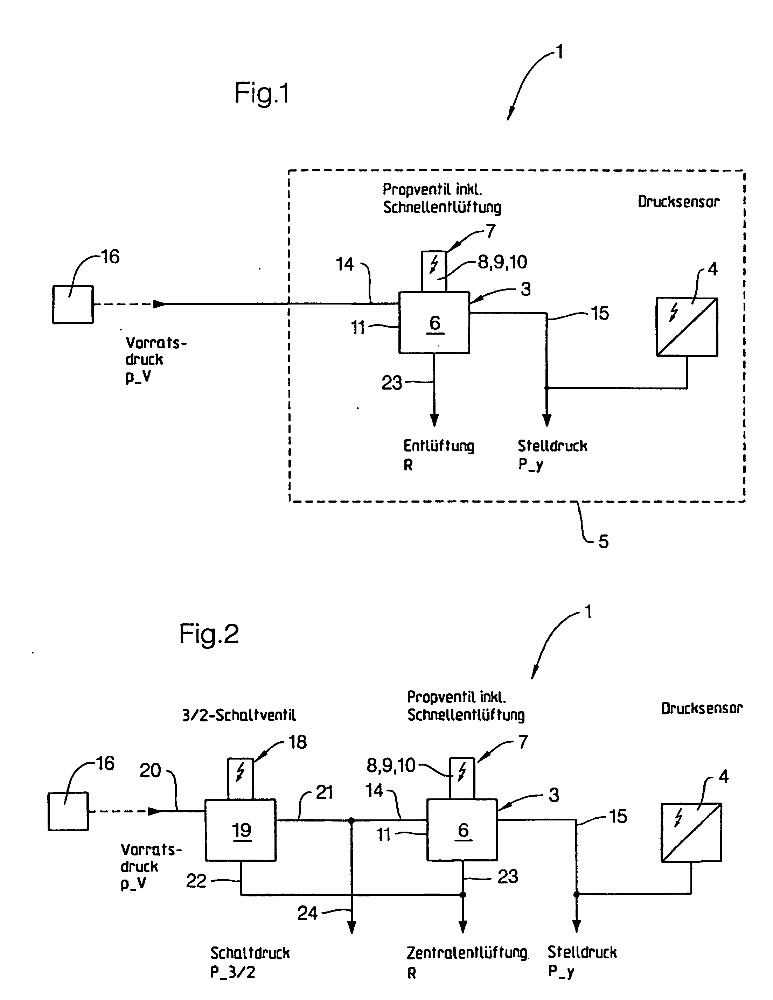

Figur 1 verdeutlicht in schematisch vereinfachter Darstellung eine Ausführung einer Ventileinrichtung 1 zur Steuerung der Betriebsweise eines, hier im einzelnen nicht dargestellten hydrodynamischen Retarders 2, mittels welchem eine Umwandlung eines eine gewünschte Betriebsweise wenigstens indirekt charakterisierenden elektrischen Stellsignales in einen pneumatischen Stelldruck zur Steuerung der Füllung beziehungsweise Entleerung des hydrodynamischen Retarders erfolgt. Die Ventileinrichtung 1 umfasst eine Proportionalventileinrichtung 3. Die Proportionalventileinrichtung 3 kann dabei unterschiedlich ausgeführt sein. Des weiteren umfasst die Ventileinrichtung wenigstens einen Sensor zur Erfassung des mittels der Ventileinrichtung zu erzeugenden Stelldruckes p_{stell.} Der Sensor 4 bildet dabei mit der Proportionalventileinrichtung 3 erfindungsgemäß eine bauliche Einheit 5. Bei der Ventileinrichtung 1 zur Umwandlung eines elektrischen Signales in einen Stelldruck pₛₜₑₗₗ handelt es sich dabei um eine elektropneumatische Druckstellvorrichtung, welche beispielsweise eine pneumatische Baueinheit 6 umfasst und eine diese ansteuernde Aktorikbaueinheit 7. Die Aktorikbaueinheit 7 kann dabei beispielsweise einen Magnetantrieb 8 mit integrierter Regelelektronik 9 umfassen. Der Magnetantrieb 8 und die Regelelektronik 9 können dabei in einem sogenannten Regelmagneten 10 zusammengefasst werden. Die pneumatische Baueinheit 6 ist beispielsweise als Schieberventil ausgeführt. Dieses umfasst ein Ventilgehäuse 11 mit einer im wesentlichen zentrischen Bohrung für einen Ventilkolben, ferner einen Eingang 14 und wenigstens einen Ausgang 15 für den Stelldruck pₛₜₑₗₗ. Der Eingang 14 ist dabei mit einer Leitung, welche mit einer Einrichtung 16 zur Vorgabe eines Vorratsdruckes koppelbar ist, wenigstens mittelbar verbunden. Die konkrete Ausführung der Aktorikbaueinheit 7 und des pneumatischen Bauelementes 6 hängt im Einzelfall von den konkreten Einsatzerfordernissen ab und liegt im Ermessen des zuständigen Fachmannes. Die hier dargestellte Ausführung stellt lediglich ein Beispiel dar. Der Sensor 4 ist vorzugsweise im Gehäuse der Proportionalventileinrichtung 3 integriert. Vorzugsweise ist der Sensor 4 zur Erfassung einer, den am Ausgang 15 anliegenden beziehungsweise ausgegebenen Stelldruck wenigstens mittelbar charakterisierenden Größe im Bereich des Ausganges 15 angeordnet. Eine andere Möglichkeit besteht darin, den Sensor 4 am Gehäuse der Proportionalventileinrichtung 3 im Bereich des Ausganges 15 anzuordnen.

Die Integration des Sensors 4 zur Erfassung einer den mittels der Proportionalventileinrichtung 3 erzeugten Stelldruckes pₛₜₑₗₗ wenigstens mittelbar charakterisierenden Größe im Gehäuse der Proportionalventileinrichtung 3 beziehungsweise die Anordnung am Gehäuse kann auf unterschiedliche Art und Weise erfolgen. Vorzugsweise werden Ausführungen angestrebt, bei denen die Proportionalventileinrichtung 3 und der Drucksensor 4 eine modulare Baueinheit bilden. Dies bietet den Vorteil, daß nur eine elektrische Steckverbindung für die Aktorik und Sensorik zur Verfügung gestellt werden muß. Allerdings ist es auch denkbar, den Sensor 4 durch zusätzliches Nachrüsten an der Proportionalventileinrichtung 3 zu befestigen. Zur Realisierung der geforderten Be- und Entlüftungszeiten zum Zwecke des Befüllens beziehungsweise Entleerens des hydrodynamischen Retarders 3 wird die Proportionalventileinrichtung mit unterschiedlichen Nennweiten angeboten. Der integrierte Sensor 4 zur Erfassung einer, den mittels der Proportionalventileinrichtung 3 erzeugten Stelldruckes wenigstens mittelbar charakterisierenden Größe dient der Minimierung des eventuell erforderlichen Luftverbrauches sowie der Minimierung der Toleranz des bereitzustellenden Stelldruckes.

In der erfindungsgemäßen Lösung ist es gemäß Figur 2 vorgesehen, die Einrichtung zur Bereitstellung des Vorratsdruckes 16 wahlweise mit der Proportionalventileinrichtung 3 koppelbar zu gestalten. Die Figur 2 verdeutlicht dabei anhand eines Blockschaltbildes die grundsätzliche Funktion der mit dieser Anordnung realisierten Betriebsweise.

Die Mittel zur wahlweisen Kopplung 18 umfassen dabei wenigstens eine Ventileinrichtung 19, welche als Schaltventil, beispielsweise in Form eines 3/2-Wege-Schaltventils ausgeführt ist. Diese Ventileinrichtung 19 ist in Reihe zur Proportionalventileinrichtung 3 angeordnet. Die Ventileinrichtung 19 weist dabei einen Eingang 20 auf, welcher mit der Einrichtung zur Bereitstellung des Vorratsdruckes 16 wenigstens mittelbar koppelbar ist, wobei diese Kopplung in der Regel über ein Leitungssystem erfolgt. Des weiteren weist die Ventileinrichtung 19 einen Ausgang 21 auf, welcher mit dem Eingang 14 der Proportionalventileinrichtung 3 wenigstens mittelbar verbindbar ist. Über einen weiteren zweiten Ausgang 22 ist die Ventileinrichtung 19 mit dem Ausgang 23 der Proportionalventileinrichtung 3 direkt gekoppelt. Dabei werden im wesentlichen zwei Schaltstellungen unterschieden, eine erste Schaltstellung, mittels welcher die Proportionalventileinrichtung 3 mit der Einrichtung zur Bereitstellung eines Vorratsdruckes 16 gekoppelt wird, einer zweiten Schaltstellung, welche die Versorgung der Proportionalventileinrichtung 3 mit dem Vorratsdruck und damit die Kopplung mit der Einrichtung zur Bereitstellung des Vorratsdruckes 16 unterbindet. Aufgrund der Reihenschaltung von Ventileinrichtung 19 und Proportionalventileinrichtung 3 unter Einbeziehung des Sensors 4 in das Steuerungs- und Regelungskonzept kann auf ein mechanisches Druckbegrenzungsventil verzichtet werden. Die Ansteuerung von Schaltventil 19 und Proportionalventileinrichtung 3 erfolgt dabei in Abhängigkeit der mittels des Sensors 4 erfaßten, und den Stelldruck pₛₜₑₗₗ in der Ausgangsleitung 15 der Proportionalventileinrichtung 3 wenigstens mittelbar charakterisierenden Größe. Als weitere Eingangsgröße zur Ansteuerung von Ventileinrichtung 19 beziehungsweise Proportionalventileinrichtung 3 wird dabei eine, den aktuellen Fahrerwunsch nach einer bestimmten Betriebsweise des hydrodynamischen Retarders wenigstens mittelbar charakterisierende Größe genutzt.

Die in den Figuren 1 und 2 beschriebene Ventileinrichtung 1 findet in Steuerungs- und Regelungssystemen für einen hydrodynamischen Retarder Anwendung. Diese Steuer- und Regelungsvorrichtungen können unterschiedlich aufgebaut sein und sich hinsichtlich der zu realisierenden Steuer- und Regelaufgaben unterscheiden. Diese Steuer- und Regelaufgaben können auch in ein Gesamtkonzept, beispielsweise eine Steuervorrichtung für ein Fahrzeugmanagement integriert werden.

### Bezugszeichenliste:

- 1.: Ventileinrichtung
- 2.: Hydrodynamischer Retarder
- 3.: Proportionalventileinrichtung
- 4.: Sensor
- 5.: Bauliche Einheit
- 6.: Pneumatische Baueinheit
- 7.: Aktorikbaueinheit
- 8.: Magnet
- 9.: Regelelektronik
- 10.: Regelmagnet
- 11.: Ventilgehäuse
- 14.: Eingang
- 15.: Ausgang Pₛₜₑₗₗ
- 16.: Einrichtung zur Bereitstellung des Vorratsdruckes
- 18.: Mittel zur wahlweisen Kopplung der Proportionalventileinrichtung 3 mit der Einrichtung zur Bereitstellung des Vorratsdruckes
- 19.: Schaltventileinrichtung
- 20.: Eingang
- 21.: Ausgang
- 22.: Ausgang
- 23.: Ausgang
- 24.: P_{Schalt}
- pₛₜₑₗₗ: Stelldruck

## Patentansprüche

1. Retarder mit einer Steuer- und/oder Regelvorrichtung, umfassend eine Stelleinrichtung, umfassend eine ventileinrichtung (1) zur Steuerung des hydrodynamischen Retarders (2), zur Umwandlung eines elektrischen Stellsignales, welches durch wenigstens eine, die Sollwertvorgabe für eine gewünschte Betriebsweise wenigstens mittelbar beschreibbare Größe, charakterisierbar ist, in einen pneumatischen Stelldruck,
1.1 mit einer Proportionalventileinrichtung (3);
1.2 mit wenigstens einer Einrichtung zur Erfassung einer, den mittels der Proportionalventileinrichtung (3) erzeugten Stelldruck wenigstens mittelbar beschreibenden Größe;
1.3 die Einrichtung zur Erfassung einer, den mit der Proportionalventileinrichtung (3) erzeugbaren Stelldruck wenigstens mittelbar charakterisierenden Größe, bildet mit der Proportionalventileinrichtung (3) eine bauliche Einheit (5);
**gekennzeichnet durch** die folgenden Merkmale:
1.4 die Einrichtung zur Erfassung wenigstens einer, den mit der Proportionalventileinrichtung (3) erzeugbaren Stelldruck wenigstens mittelbar charakterisierenden Größe umfasst wenigstens einen Drucksensor (4).
1.5 die Proportionalventileinrichtung (3) weist wenigstens einen Eingang (14) auf, welcher wenigstens mittelbar mit einer Einrichtung zur Bereitstellung von Vorratsdruck (16) koppelbar ist;
1.6 es sind Mittel zur wahlweisen Kopplung (18) des Einganges (14) der Proportionalventileinrichtung (3) mit einer Einrichtung zur Bereitstellung von Vorrastdruck (16) vorgesehen, wobei die Mittel zur wahlweisen Kopplung wenigstens eine Schaltventileinrichtung (19) umfassen,
1.7 die Schaltventileinrichtung (19) wenigstens zwei schaltstellungen umfasst:
- eine erste Schaltstellung, in welcher die Einrichtung zur Bereitstellung des Vorratsdruckes (16) mit der Proportionalventileinrichtung (3) gekoppelt ist;
- eine zweite Schaltstellung, in welcher die Kopplung der Einrichtung zur Bereitstellung des Vorratsdruckes (16) mit der Proportionalventileinrichtung (3) unterbrochen ist.

2. Retarder nach Anspruch 1, **dadurch gekennzeichnet, dass** die Einrichtung zur Erfassung einer, den mit der Propartionalventileinrichtung (3) erzeugten Stelldruck wenigstens mittelbar charakterisierenden Größe im Gehäuse der Proportionalventileinrichtung (3) integriert ist.

3. Retarder nach Anspruch 1, **dadurch gekennzeichnet, dass** die Einrichtung zur Erfassung wenigstens einer, den mit der Proportionalventileinrichtung (3), erzeugten Stelldruck wenigstens mittelbar charakterisierenden Größe am Gehäuse der Proportionalventileinrichtung (3) angeordnet ist.

4. Retarder nach einem der Ansprüche 2 oder 3, **dadurch gekennzeichnet, dass** das Gehäuse der Proportionalventileinrichtung (3) das Gehäuse der Ventileinrichtung (1) bildet.

5. Retarder nach einem der Ansprüche 1 bis 4, **dadurch gekennzeichnet, dass** die Auslegung der Proportionalventileinrichtung (3) in Abhängigkeit der geforderten Be- und Entlüftungszeiten für den hydrodynamischen Retarder erfolgt.

## Claims

1. A retarder with an open-loop control apparatus and/or a closed-loop control apparatus, comprising an actuating device which comprises a valve device (1) for controlling the hydrodynamic retarder (2), for converting an electric actuating signal which can be **characterized by** at least one variable describing the setpoint assignment for a desired operating mode at least indirectly, in a pneumatic actuating pressure;
1.1 with a proportional valve device (3);
1.2 with at least one device for detecting a variable describing at least indirectly the actuating pressure generated by means of the proportional valve device (3);
1.3 with the device for detecting a variable **characterizing** at least indirectly the actuating pressure which can be generated with the proportional valve device (3) forming a modular unit (5) with the proportional valve device (3);
**characterized by** the following features:
1.4 the device for detecting at least one variable **characterizing** at least indirectly the actuating pressure which can be generated with the proportional valve device (3) comprises at least one pressure sensor (4);
1.5 the proportional valve device (3) comprises at least one input (14) which can be coupled at least indirectly with a device for providing storage pressure (16);
1.6 means are provided for the optional coupling (18) of the input (14) of the proportional valve device (3) with a device for providing storage pressure (16), with the means for the optional coupling comprising at least one switch-over valve device (19);
1.7 the switch-over valve device (19) comprises at least two switching positions:
- a first switching position in which the device for providing the storage pressure (16) is coupled with the proportional valve device (3);
- a second switching position in which the coupling of the device for providing the storage pressure (16) with the proportional valve device (3) is interrupted.

2. A retarder according to claim 1, **characterized in that** the device for detecting a variable **characterizing** at least indirectly the actuating pressure which can be generated with the proportional valve device (3) is integrated in the housing of the proportional valve device (3).

3. A retarder according to claim 1, **characterized in that** the device for detecting at least one variable **characterizing** at least indirectly the actuating pressure which can be generated with the proportional valve device (3) is arranged in the housing of the proportional valve device (3).

4. A retarder according to one of the claims 2 or 3, **characterized in that** the housing of the proportional valve device (3) forms the housing of the valve device (1).

5. A retarder according to one of the claims 1 to 4, **characterized in that** the configuration of the proportional valve device (3) occurs depending on the required airing and venting times for the hydrodynamic retarder.

## Revendications

1. Ralentisseur avec un dispositif de commande et/ou à régulation comprenant un organe de commande comprenant un système de valves (1) destiné à commander le ralentisseur hydrodynamique (2) afin de convertir un signal de commande électrique apte à être **caractérisé par** au moins une grandeur susceptible de décrire du moins indirectement la valeur de consigne imposée pour un mode de fonctionnement souhaité en une pression de commande pneumatique,
1.1 avec un système de valves proportionnelles (3) ;
1.2 avec au moins un système destiné à détecter une grandeur décrivant du moins indirectement la pression de commande générée au moyen du système de valves proportionnelles (3) ;
1.3 le système destiné à détecter une grandeur caractérisant du moins indirectement la pression de commande apte à être générée avec le système de valves proportionnelles (3) forme avec le système de valves proportionnelles (3) un ensemble structurel (5) ;
**caractérisé par** les particularités suivantes :
1.4 le système destiné à détecter au moins une grandeur caractérisant du moins indirectement la pression de commande apte à être générée avec le système de valves proportionnelles (3) comprend au moins un capteur de pression (4) ;
1.5 le système de valves proportionnelles (3) comporte au moins une entrée (14) apte à être couplée du moins indirectement à un système destiné à fournir la pression de réserve (16),
1.6 des moyens destinés au couplage optionnel (18) de l'entrée (14) du système de valves proportionnelles (3) au système destiné à fournir la pression de réserve (16) sont prévus, les moyens destinés au couplage optionnel comprenant au moins un système de soupapes de commutation (19),
1.7 le système de soupapes de commutation (19) comprenant au moins deux positions de commutation :
- une première position de commutation dans laquelle le système destiné à fournir la pression de réserve (16) est couplé au système de valves proportionnelles (3) ;
- une deuxième position de commutation dans laquelle le couplage du système destiné à fournir la pression de réserve (16) au système de valves proportionnelles (3) est interrompu.

2. Ralentisseur selon la revendication 1, **caractérisé en ce que** le système destiné à détecter une grandeur caractérisant du moins indirectement la pression de commande générée avec le système de valves proportionnelles (3) est intégré dans le boîtier du système de valves proportionnelles (3).

3. Ralentisseur selon la revendication 1, **caractérisé en ce que** le système destiné à détecter au moins une grandeur caractérisant du moins indirectement la pression de commande générée avec le système de valves proportionnelles (3) est disposé sur le boîtier du système de valves proportionnelles (3).

4. Ralentisseur selon l'une quelconque des revendications 2 ou 3, **caractérisé en ce que** le boîtier du système de valves proportionnelles (3) forme le boîtier du système de valves (1).

5. Ralentisseur selon l'une quelconque des revendications 1 à 4, **caractérisé en ce que** le système de valves proportionnelles (3) est conçu en fonction des temps d'aération et de désaération requis pour le ralentisseur hydrodynamique.
